# EUROPEAN PATENT SPECIFICATION

(11) **EP 3 862 593 B1**
(45) Date of publication and mention of the grant of the patent: **19.08.2026**
(21) Application number: 21155896.0
(22) Date of filing: 09.02.2021
(51) Int. Cl.: F16F 7/08, E04B 1/98

(54) **ANTI-SEISMIC ISOLATOR OF THE SLIDING PENDULUM TYPE**
ANTISEISMISCHER ISOLATOR VOM TYP EINES GLEITENDEN PENDELS
ISOLANT ANTISISMIQUE DE TYPE PENDULE COULISSANT

(30) Priority: 10.02.2020 IT 202000002542
(43) Date of publication of application: 11.08.2021
(73) Proprietor: FIP MEC S.R.L., 35030 Selvazzano Dentro (PD) (IT)
(72) Inventor: COLATO, Gianpaolo, 35030 Selvazzano Dentro (IT)
(74) Representative: Contadin, Giorgio

(56) References cited:
- EP-A1- 2 198 099
- EP-A1- 3 158 148
- EP-B1- 2 198 099
- EP-B1- 3 158 148
- WO-A1-2017/141172
- CN-B- 106 223 508
- US-A1- 2016 084 308

## Description

The present invention falls within the field of civil construction and in greater detail, relates to an anti-seismic isolator of the so-called sliding pendulum type.

Essentially, the invention at hand relates to an anti-seismic isolator for protecting buildings, in which the isolator has the shape of a sliding (also dual) pendulum support, in which the surface on which the sliding material slides is coated by coatings with a low friction coefficient rather than stainless steel sheets, as occurs in the prior art.

It is known in the field of civil engineering and architecture, that the term "anti-seismic isolators" means those devices which serve to structurally or physically isolate the load-bearing structure of the buildings from the disruptive and often devastating effects of an abrupt and sudden natural event such as an earthquake. A particular type of dissipative anti-seismic isolators of the known type, to which the present invention specifically refers to, is called "sliding pendulum" in the basic variant, and "dual sliding pendulum" in the more detailed variant: these anti-seismic isolators are known also in the field abbreviated by FPS, acronym for *"friction pendulum system".*

In any case, the possible various versions of such anti-seismic isolators of the prior art share the fact of comprising an anchoring plate adapted to be arranged close to a foundation structure (also called substructure) and a strike plate arranged above the anchoring plate along a linear axis and adapted to at least help to support an elevated structure (also called superstructure) to dissipate the kinetic energy transmitted to the elevated structure itself by a natural phenomenon (or also assuming an impromptu human-caused event) provided with a high release of total energy (or mechanical energy).

A conventional anti-seismic isolator of the type herein at hand also includes at least a sliding and dissipation pad made of plastic material and arranged in simple support against the anchoring plate and the strike plate between which it is interposed in such a way to swing freely on the anchoring plate and the strike plate according to one or more random (but generally, radial) side directions, orthogonal to the linear axis, alternately between a first position, taken on in absence of the aforesaid natural phenomenon or the human-caused event, in which the sliding and dissipation pad, the anchoring plate and the strike plate are substantially coaxial to one another, and a plurality of second positions, taken on while the natural phenomenon or the human-caused event is in progress, in which the sliding and dissipation pad, the anchoring plate and the strike plate are offset from one another, to dissipate the kinetic energy of the natural phenomenon or the human-caused event transmitted to the elevated structure.

In case of simple sliding pendulum, the anti-seismic isolator encompasses a single sliding and dissipation pad in contact both with the anchoring plate and with the strike plate, while in case of dual sliding pendulum, the anti-seismic isolator encompasses two mutually coupled sliding pads, one in contact with the anchoring plate and the other in contact with the strike plate.

In general, the prior art provides facing the sliding pad (for example, made of a more or less loaded thermoplastic plastic material such as PTFE, UHMW-PE, POM, PA or a more or less fiber-reinforced thermosetting plastic material) with a stainless steel sheet, in the form of a cap, obtained from a flat sheet - usually having thickness of 2.5 mm - and mirror polished, i.e. with roughness, normally expressed in R_{z} (which practically provides a measurement of the maximum irregularity of a surface averaged over five peaks and five troughs) less than 1.

Thereby, there is however the risk of running into at least a couple of problems, subsequent to the fact that the stainless steel cap, being obtained by means of plastic deformation of a starting flat sheet, it unlikely to have an identical geometry to the concave one of the outer face of the anchoring plate or of the strike plate, which is made of mechanically processed steel by means of computerized numerical control machines (CNC): on average, in the components at hand, tolerances are accepted on the radius of curvature of the stainless steel cap equal to ±10% (equivalent to several tens of millimeters, the radii of curvature usually being in the order of 2,000-6,000 mm) with respect to the nominal value, while the tolerances of the concave seat in the outer face of the two opposing steel plates are quite different, in the order of hundredths of a millimeter.

To avoid possible problems of the buckling (or bowing) of the stainless steel laminar cap during the swinging movement of the pendulum isolator associated with what is described in the preceding paragraph, the cap itself is not rigidly fastened to the respective steel plate (in essence it is not screwed, welded, glued or more generally, made irremovable), rather is simply inserted in a kind of annular pocket obtained in the side edge of the anchoring plate and the strike plate, by providing calibrated geometries and spaces, where it is left free to be deformed.

The unsealed gap thus created - both in a ring and axially - between the laminar cap and the related support plate (anchoring plate and strike plate) is the negative cause of water stagnation or at least of moisture, which to some extent still affect the durability thereof.

Additionally, the interface surface between the steel supporting plate and the stainless steel laminar cap usually is protected from corrosion by means of the application of a layer of paint: when increased dissipative performance is required from the anti-seismic isolator, in the form of increased friction coefficients - on average exceeding 7 to 8% - the concrete possibility exists for the sliding of the device to occur negatively between the stainless steel laminar cap and painted surface of the support plate rather than between sliding pad made of plastic material and stain laminar cap, as should instead occur.

Therefore, starting from the knowledge of the aforesaid drawbacks of the prior art, the present invention provides to effectively solve them.

In particular, it is main purpose of the invention to provide a dissipative anti-seismic isolator of the so-called sliding pendulum type which has smooth, long-lasting sliding surfaces (on which the sliding and dissipation pad made of both thermosetting and thermoplastic plastic material is caused to swing) which therefore are not modified in an apparent and unfavorable manner with the continued operation or with ageing.

In other words, main purpose of this invention is to conceive an anti-seismic isolator of the so-called sliding pendulum type which, in the reference time unit, has less wear of the sliding surfaces of the two opposing support plates with respect to the one of the equivalent isolators of the known type.

It is a second purpose of this invention to propose an anti-seismic isolator of the so-called sliding pendulum type which presents a better geometrical and mechanical accuracy than the one of the anti-seismic isolators of the known art.

Within the cognitive realm of these purposes, the task of the invention is to indicate an anti-seismic isolator of the so-called sliding pendulum type which allows, with respect to the known anti-seismic isolators, the risk of the formation of damaging water stagnation or moisture to be avoided or at least drastically reduced in the interstitial spaces between the components thereof, which, as mentioned, are encountered in the prior art.

It is another purpose of the invention to provide an anti-seismic isolator of the so-called sliding pendulum type which has a simpler construction concept with respect to the one of the anti-seismic isolators of the known art comparable thereto, without this resulting in a loss of performance.

It is a last but not least purpose of the present invention to make a dissipative anti-seismic isolator of the so-called sliding pendulum type which has a lower weight with respect to the one of the known anti-seismic isolators, the materials employed for building the essential components thereof (opposing support plates and sliding and dissipation pad) being equal.

Said objects are achieved by an anti-seismic isolator of the so-called sliding pendulum type according to the accompanying claim 1, to which reference is made for brevity of disclosure.

Further detailed construction features of the sliding pendulum anti-seismic isolator of the invention are contained in the corresponding dependent claims.

The aforesaid claims, as hereinafter specifically and concretely defined, are intended as an integral part of the present description.

Advantageously, the sliding pendulum anti-seismic isolator of the invention allows the stainless steel laminar cap to be eliminated which, in the known art, serves as coupling element for the sliding and dissipation pad made of plastic material, thus favorably ensuring the same geometrical tolerances of the spherical surface of the processed steel anchoring plate and the strike plate, a sufficiently smooth sliding surface comparable to the finishing level of the mirror polished stainless steel laminar cap and an increased durability over time.

This is by virtue of the fact that in the anti-seismic isolator of the invention, at least the anchoring plate and the strike plate have an outer face in contact (or cooperating) with the sliding and dissipation pad, entirely or completely coated with a laminar sliding layer - which at the same time serves as protective layer - which is made of dry lubrication polymeric material, with a low friction coefficient and low wear and which spontaneously, stably and immovably adheres to the aforesaid outer face of the anchoring plate and of the strike plate.

From a technical point of view, the laminar sliding layer provided by the anti-seismic isolator of the invention is applied in various manners - and is not coupled to the outer face as occurs in the most pertinent prior art (see prior documents EP3158148 A1 and EP2198099 A1) - directly to at least one of either the anchoring plate and the strike plate so as to form a thin antifriction film - in the order of few hundredths of micrometers - which facilitates the mutual sliding of such plates and the subsequent dissipation of the kinetic energy associated with a natural phenomenon (such as an earthquake) or a sudden human-caused event and transmitted to the elevated structure supported by the anti-seismic isolator.

Thus, in the anti-seismic isolators of the known art, in particular those shown in EP3158148 A1 and EP2198099 A1, the laminar sliding layer is an external, separate and independent component - in other words, prefabricated - which is obtained in one piece, from solid, generally starting from a semi-finished sheet, and then is set in the outer face of the anchoring plate and/or of the strike plate: this is not at all the case for the anti-seismic isolator of the invention, where the laminar sliding layer is an actual coat.

This circumstance is reflected in a lower thickness of the laminar sliding layer of the anti-seismic isolator of the invention with respect to the one of the laminar layers set forth in documents EP3158148 A1 and EP2198099 A1, and in return, in an overall lower weight of the anti-seismic isolator of the invention with respect to the one of the anti-seismic isolators of the known type shown in such prior documents, without this negatively impacting the functional efficacy of the device of the invention and herein claimed.

Again advantageously, emphasized also in light of what is explained above, the sliding pendulum anti-seismic isolator of the present invention has a lower number of components than the one of the similar anti-seismic isolators of the prior art, this undoubtedly resulting in a simpler, less complex construction concept with respect to the one of the sliding pendulum anti-seismic isolators of the known art.

In a particularly and mainly advantageous manner, the anti-seismic isolator of the present invention has a laminar sliding layer distributed in a more accurate and complete manner with respect to the equivalent isolators of the known type given that the laminar layer involves the anchoring plate and/or the strike plate up to the respective perimeter edge thereof, contrarily to what is verifiable in the prior art closest to the invention, consisting of documents EP3158148 A1 and EP2198099 A1: this aspect reflects in an increased dissipative capacity by the anti-seismic isolator of the invention with respect to the anti-seismic isolators most closely comparable thereto.

Just as advantageous, the sliding pendulum anti-seismic isolator of the invention has a lower weight and production cost with respect to the ones of the anti-seismic isolators of the known art, the type and cost of the raw materials and the cost of labor employed being equal.

Equally advantageous, the sliding pendulum anti-seismic isolator of the present invention prevents the water and moisture stagnation conventionally encountered in the prior art anti-seismic isolators equivalent thereto, with all the advantages in terms of wear and duration resulting therefrom and originating from the provision of a thin and soft laminar sliding - and, as mentioned, also providing anti-corrosion protection - layer made of polymeric material, irremovably adhering to the outer face of the anchoring plate and/or of the strike plate, in place of the stainless steel laminar cap of the common sliding pendulum anti-seismic isolators of known type.

Said purposes and advantages will be more apparent from the description that follows, related to a preferred embodiment of the dissipative anti-seismic isolator of the sliding pendulum type of the invention, given by way of indicative and nonlimiting example, with reference to the appended drawings, in which:
- figure 1 is an assonometric cut-away view of the dissipative anti-seismic isolator of the sliding pendulum type of the invention, in a first operating position;
- figure 2 is an assonometric cut-away view of the dissipative anti-seismic isolator in figure 1, in a second operating position;
- figure 3 is an assonometric cut-away view of the dissipative anti-seismic isolator in figure 1, in a third operating position.

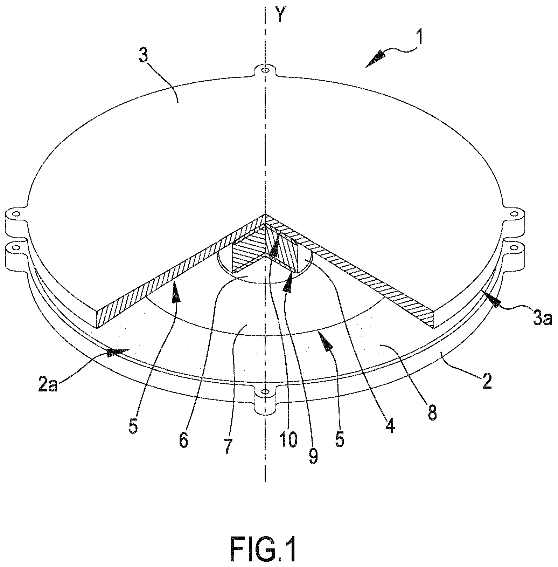

The dissipative anti-seismic isolator of the sliding pendulum type of the present invention is shown in the resting condition thereof in Figure 1, where it is indicated as a whole by numeral 1.

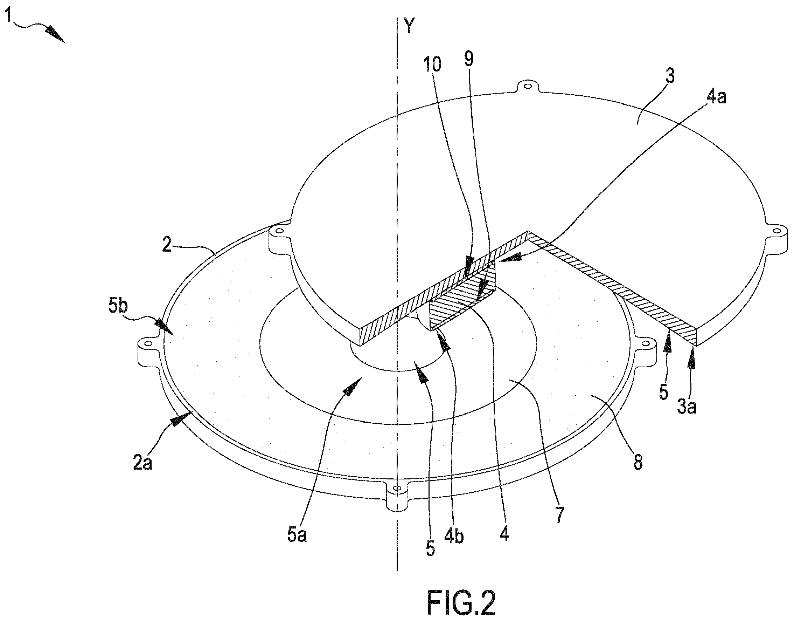

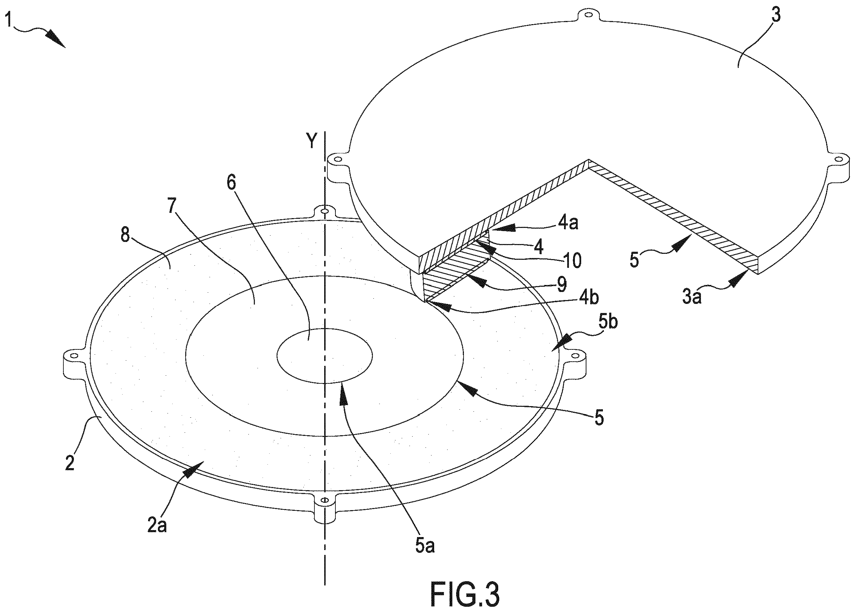

As shown, the anti-seismic isolator 1 of the sliding pendulum type includes:
- an anchoring plate 2, made of metal material such as steel, adapted to be arranged close to a foundation structure (also called substructure, not shown);
- a strike plate 3, also made of a metal material such as steel, arranged above the anchoring plate 2 along a linear axis Y and adapted to at least help to support an elevated structure (also called superstructure, not shown) to dissipate the kinetic energy transmitted to the elevated structure itself by a natural phenomenon or a human-caused event, in any case in both cases provided with a high release of total energy (or mechanical energy);
- a sliding and dissipation pad (or block) 4, made of thermoplastic or thermosetting plastic material, arranged in simple support against the anchoring plate 2 and the strike plate 3 between which it is interposed in such a way to swing freely on the anchoring plate 2 and the strike plate 3 according to one (non-claimed embodiment) or more random side directions, orthogonal to the linear axis Y, alternately between a first position (shown in figure 1), taken on in the absence of the natural phenomenon or the human-caused event, in which the sliding and dissipation pad 4, the anchoring plate 2 and the strike plate 3 are substantially coaxial to one another, and a plurality of second positions (some of which shown in figures 2 and 3), taken on while the natural phenomenon or the human-caused event is in progress, in which the sliding and dissipation pad 4, the anchoring plate 2 and the strike plate 3 are offset from one another, to dissipate the kinetic energy of the natural phenomenon or the human-caused event, transmitted to the elevated structure.

According to the invention, in the specific case, the anchoring plate 2 and the strike plate 3 have a mutually facing outer face 2a, 3a in contact (and cooperating) with the sliding and dissipation pad 4, entirely, totally or completely coated with a laminar sliding layer (or coat) 5, which also serves the function of protection against corrosion, which is made of dry lubrication polymeric material, with a low friction coefficient and low wear and which, due to the direct and subsequent effect of the application system thereof, spontaneously, stably, integrally and immovably adheres to the outer face 2a, 3a of the anchoring plate 2 and the strike plate 3.

Therefore, the laminar sliding layer (or coat) 5 does not require mechanical coupling systems in order to be made integral with the anchoring plate 2 and/or the strike plate 3, as occurs in EP3158148 A1 and EP2198099 A1, rather it adheres thereto in a spontaneous and natural manner.

In particular, the outer face 2a, 3a, to which the laminar sliding layer 5 is stably coupled, of the anchoring plate 2 and the strike plate 3, respectively, is concave.

Moreover, the anchoring plate 2 and the strike plate 3 generally preferably have the same profile and the same dimensions; in greater detail, the anchoring plate 2 and the strike plate 3 conventionally (although not exclusively) have a circular profile, with diameter value in the range 200 to 1,500 mm.

Preferably and advantageously, the laminar sliding layer 5 is soft and has a thickness value in the range of 220-350 µm, more preferably equal to 250 µm.

Additionally, the laminar sliding layer 5 is evenly distributed, by thickness and surface extension, over the entire surface of the outer face 2a, 3a of the respective anchoring plate 2 and the strike plate 3.

Preferably but not necessarily, the laminar sliding layer 5 is applied to the entire surface of the outer face 2a, 3a of the anchoring plate 2 and the strike plate 3 by any one of the processes selected from the group consisting in painting, lacquering, graphitizing, polymerization.

In particular, in case of painting, the laminar sliding layer 5 is preferably obtained by three separate spray applications of water-soluble spray to reach the above-indicated thickness.

According to the preferred embodiment of the invention herein described the friction coefficient of said polymeric material increases starting from the central area 5a of the laminar sliding layer 5 up to the peripheral side edge 5b of such a laminar sliding layer 5.

In this respect, the laminar sliding layer 5 is preferably divided into a plurality of annular sectors which are concentric (or coaxial) with one another - here, by mere way of example, three and marked with the respective reference 6, 7, 8 in the accompanying drawings, where they are shown for the anchoring plate 2 alone - made of dry lubrication polymeric material having a different friction coefficient for at least two of such annular sectors 6, 7, 8.

Essentially, according to what is said above, the polymeric material of each of the annular sectors 6, 7, 8 preferentially is different from the polymeric material of the remaining annular sectors 6, 7, 8.

Likewise, this results in the friction coefficient of the polymeric material preferably progressively increasing starting from the most central - numbered with 6 - of the annular sectors 6, 7, 8 up to the most peripheral - numbered with 8 - of the aforesaid annular sectors 6, 7, 8.

Therefore, in a preferred but non-binding manner, the concave sliding surface 2a, 3a here is coated with a non-homogeneous laminar sliding layer 5 (and this in radial direction but not in axial direction, where the thickness instead is uniform and constant), but comprising special coatings made of polymeric materials having different friction features; such special coatings are applied according to concentric annular sectors 6, 7, 8, thus allowing different frictions to be obtained according to the movement of the intermediate sliding and dissipation pad (or lens or block) 4 of the anti-seismic isolator 1 of the invention.

In this manner, assuming the outermost annular sector (or band) 8 is made of a polymeric material having a higher friction coefficient with respect to the one of the polymeric material of the innermost annular sectors 6, 7, a braking effect may be obtained on the anti-seismic isolator 1 of the invention in such a way as to better control, by containing them, the movements of the sliding and dissipation pad 4 and of the strike plate 3 in the case of telluric events which are higher than those estimated in the design step.

It is apparent from the above that in the case herein described with the aid of the drawings, also the laminar sliding layer 5 of the strike plate 3 has concentric (or coaxial) annular sectors 6, 7, 9, although they are not shown in such accompanying drawings.

Moreover, the laminar sliding layer 5 here is preferably, but not exclusively, of the aqueous solvent type, dry to the touch and with the addition of inner microcapsules or microspheres (not shown in the accompanying drawings) containing an active liquid ingredient adapted to be released during the application of pressure and/or a cutting force on the anchoring plate 2 and/or on the strike plate 3, pressure and/or cutting force which are generated by the natural phenomenon or by the human-caused event and which result in the breaking of the inner microcapsules or microspheres.

Thereby, the active liquid ingredient released forms an additional sliding microfilm (also not shown in the attached drawings) between the laminar sliding layer 5 of the anchoring plate 2 and the sliding and dissipation pad 4 and, here, also between the laminar sliding layer 5 of the strike plate 3 and the sliding and dissipation pad 4.

Generally, the thickness of the additional sliding microfilm is less than the thickness of the laminar sliding layer 5 on which the first one rests, extends or is distributed.

More in detail, in the specific case, when released and forming the additional sliding microfilm by polymerization, the active liquid ingredient is interposed between:
- the laminar sliding layer 5 associated with the anchoring plate 2 and a first external face 4a of the sliding and dissipation pad 4 cooperating with the lower anchoring plate 2;
- the laminar sliding layer 5 associated with the strike plate 3 and a second external face 4b, axially opposite to the first external face 4a, of the sliding and dissipation pad 4 cooperating with the upper strike plate 3.

Specifically, each of the inner microcapsules or microspheres comprises an external shell made of plastic material and a lubrication oil contained in the external shell and constituting the active liquid ingredient released during the natural phenomenon or the invasive human-caused event.

Preferably, the external shell is made of plastic material in order to be chemically and mechanically stable: such a plastic material preferably is an amine-based resin.

This so-called "micro-encapsulation" technology therefore consists in wrapping particular liquid substances - having the dimensions of a micron - with an external shell; the goal is to selectively isolate these chemical agents - liquid active ingredients - and release them in a given moment.

The individual properties of the microcapsules are determined by the specific feature and by the degree of reticulation of the plastic material with which the external shell is made by means of the simultaneous application of pressure and a cutting force, the active liquid contained in the microcapsules is released in a selective manner, i.e. suitably calibrating the resistance of the shell.

With regards to the dry lubrication polymeric material with which the laminar sliding layer 5 is made, it preferably consists of an epoxy resin.

The epoxy resin presents the advantage of being simple to process and treat, in addition to having a contained cost with respect to other types of resin, compared to the above-mentioned advantages to which it clearly and evidently contributes.

In just as preferred but non-binding manner, such an epoxy resin contains solid lubricating components selected from the group consisting of molybdenum disulphide, graphite, polytetrafluoroethylene (PTFE) or combinations thereof in variable proportions.

It should be noted, in a preferred, advantageous, but not exclusive manner, that the intermediate (or central) sliding and dissipation pad 4 in the dissipative anti-seismic isolator 1 of the invention is made of metallic material such as steel, and presents both the front external faces 4a, 4b axially opposite each other (and in contact on one side with the anchoring plate 2 and on the axially opposite side with the strike plate 3), coated with a respective dissipative layer 9, 10 made of a polymeric material of conventional type, whether thermosetting or thermoplastic, adhering integrally, stably and immovably to the aforesaid front external faces 4a, 4b.

Thereby, the dissipative layer 9, 10 coating the intermediate (or central) sliding and dissipation pad 4 cooperates by contact with the laminar sliding layer 5 both of the anchoring plate 2 and the strike plate 3.

It is understood that in other embodiments of the anti-seismic isolator of the invention (not accompanied by reference drawings), also one or more of the two front mutually opposing external faces of the intermediate sliding and dissipation pad may be coated with the same laminar sliding layer made of dry lubrication polymeric material with which the internal face of the anchoring plate and/or of the strike plate is coated.

Moreover, according to another aspect of the invention, only one or more of the two front mutually opposite external faces of the middle sliding and dissipation could be coated with a laminar sliding layer made of dry lubrication polymeric material, of the type described above, thereby the outer face of the anchoring plate and/or of the strike plate facing it is coated with a regular dissipative layer made of polymeric material, whether thermosetting or thermoplastic.

Figures 1 to 3 highlight the operating sequence of the function of the sliding pendulum dissipative anti-seismic isolator 1 of the invention in the passage thereof from the resting condition in figure 1 to the condition of maximum lateral movement in figure 3, after the sliding of the sliding and dissipation pad 4, via the intermediate lateral movement condition in figure 2.

At the light of what illustrated above, it is, therefore, understood that the dissipative anti-seismic isolator of the sliding pendulum type of the current invention achieves the purposes and reaches advantages indicated above.

Upon execution, changes could be made to the dissipative anti-seismic isolator of the sliding pendulum type of the present invention, consisting for non-claimed example of the fact that only one among the anchoring plate and the strike plate has, on the external face, in contact with the sliding and dissipation pad, a laminar sliding coat made of dry lubrication polymeric material and adhering integrally, stably and immovably to such an external face.

In addition, other embodiments of the invention may exist (not depicted in the accompanying drawings), in which the dissipative anti-seismic isolator comprises a number of intermediate sliding and dissipation pads greater than one, conventionally two, in order to form a dual sliding pendulum anti-seismic isolator.

Finally, it is evident that several other changes could be made to the dissipative anti-seismic isolator of the sliding pendulum type at hand, without departing from the principles of novelty inherent in the inventive idea, just as it is apparent that in the practical implementation of the invention, materials, shapes and sizes of the details shown may be any, according to the requirements, and may be replaced by other technically equivalent elements.

Where the constructional features and techniques mentioned in the following claims are followed by reference signs or numerals, such reference signs were introduced for the sole purpose of increasing intelligibility of the claims themselves, and, therefore, such reference signs have no limiting effect on the interpretation of each element identified merely by way of example only by such reference signs.

## Claims

1. Anti-seismic isolator (1) of the sliding pendulum type, comprising:
- an anchoring plate (2) adapted to be arranged close to a foundation structure;
- a strike plate (3) arranged above said anchoring plate (2) along a linear axis (Y) and adapted to at least help to support an elevated structure to dissipate the kinetic energy transmitted to said elevated structure by a natural phenomenon or a human-caused event and provided with a high release of total energy;
- at least one sliding and dissipation pad (4) arranged in simple support against said anchoring plate (2) and said strike plate (3) between which it is interposed in such a way as to swing freely on said anchoring plate (2) and said strike plate (3) according to more than one random side directions, orthogonal to said linear axis (Y), alternately between a first position, taken on in the absence of said natural phenomenon or said human-caused event, in which said sliding and dissipation pad (4), said anchoring plate (2) and said strike plate (3) are substantially coaxial to one another, and a plurality of second positions, taken on while said natural phenomenon or said human-caused event is in progress, in which said sliding and dissipation pad (4), said anchoring plate (2) and said strike plate (3) are offset from one another, to dissipate said kinetic energy of said natural phenomenon or said human-caused event, transmitted to said elevated structure,
wherein at least said anchoring plate (2) and said strike plate (3) have an outer face (2a, 3a), in contact with said sliding and dissipation pad (4), entirely coated with a laminar sliding layer (5) which is:
• made of dry lubrication polymeric material;
• applied to said outer face (2a, 3a) of said anchoring plate (2) and said strike plate (3) so as to be spontaneously, stably and irremovably adhering to said outer face (2a, 3a) of said anchoring plate (2) and said strike plate (3), wherein said dry lubrication polymeric material is an epoxy resin.

2. Isolator (1) according to claim 1), **characterized in that** said laminar sliding layer (5) is soft and has a thickness value in the range of 220-350 µm.

3. Isolator (1) according to claim 1) or 2), **characterized in that** said laminar sliding layer (5) is evenly distributed, by thickness and surface extension, over the entire surface of said outer face (2a, 3a) of said anchoring plate (2) and/or of said strike plate (3).

4. Isolator (1) according to any of the previous claims, **characterized in that** said laminar sliding layer (5) is applied to the entire surface of said outer face (2a, 3a) of said anchoring plate (2) and/or of said strike plate (3) by any of the processes selected from the group consisting in painting, lacquering, graphitizing, polymerization.

5. Isolator (1) according to any of the previous claims, **characterized in that** the friction coefficient of said polymeric material increases starting from the central area (5a) of said laminar sliding layer (5) up to the peripheral side edge (5b) of said laminar sliding layer (5).

6. Isolator (1) according to any of the previous claims, **characterized in that** said laminar sliding layer (5) is divided into a plurality of annular sectors (6, 7, 8) which are concentric with one another, made of said dry lubrication polymeric material with a different friction coefficient for at least two of said annular sectors (6, 7, 8).

7. Isolator (1) according to claim 6), **characterized in that** said friction coefficient of said polymeric material increases from the most central (6) of said annular sectors (6, 7, 8) to the most peripheral (8) of said annular sectors (6, 7, 8).

8. Isolator (1) according to any of the previous claims, **characterized in that** said laminar sliding layer (5) is of the aqueous solvent type, dry to the touch and with the addition of inner microcapsules or microspheres containing an active liquid ingredient adapted to be released during the application of pressure and/or a cutting force on said anchoring plate (2) and/or said strike plate (3), generated by said natural phenomenon or by said human-caused event, which leads to the breaking of said inner microcapsules or microspheres, to form an additional sliding microfilm between said laminar sliding layer (5) of said anchoring plate (2) and said sliding and dissipation pad (4) and/or between said laminar sliding layer (5) of said strike plate (3) and said sliding and dissipation pad (4).

9. Isolator (1) according to claim 8), **characterized in that** when released, said active liquid ingredient is interposed between said laminar sliding layer (5) associated with said anchoring plate (2), and a first external face (4a) of said sliding and dissipation pad (4) cooperating with said anchoring plate (2), and/or between said laminar sliding layer (5) associated with said strike plate (3), and a second external face (4b) of said sliding and dissipation pad (4) cooperating with said strike plate (3).

10. Isolator (1) according to claim 8) or 9), **characterized in that** each of said inner microcapsules or microspheres comprises an external shell made of plastic material, and a lubrication oil contained in said external shell and constituting said active liquid ingredient released during said natural phenomenon or said human-caused event.

11. Isolator (1) according to claim 10), **characterized in that** said external shell is made of plastic material.

12. Isolator (1) according to claim 11), **characterized in that** said plastic material is an amine-based resin.

13. Isolator (1) according to claim 12), **characterized in that** said epoxy resin contains solid lubricating components selected from the group consisting of molybdenum disulphide, graphite, polytetrafluoroethylene (PTFE) or combinations thereof in variable proportions.

14. Isolator (1) according to any of the previous claims, **characterized in that** said sliding and dissipation pad (4) has at least one of the two external faces (4a, 4b) axially opposite each other, in contact on one side with said anchoring plate (2) and on the axially opposite side with said strike plate (3), coated with a dissipative layer (9, 10) made of thermosetting or thermoplastic polymeric material, adhering integrally, stably and immovably to at least one of said external faces (4a, 4b).

15. Isolator (1) according to any of the previous claims, **characterized in that** said outer face (2a, 3a), to which said laminar sliding layer (5) is stably coupled, of said anchoring plate (2) and/or said strike plate (3), is concave.

## Patentansprüche

1. Antiseismischer Isolator (1) vom Typ eines geleitenden Pendels, mit:
- einer Ankerplatte (2), die dafür ausgelegt ist, nahe an einem Fundament angeordnet zu werden;
- einer Anschlagplatte (3), die entlang einer linearen Achse (Y) über der Ankerplatte (2) angeordnet und dafür ausgelegt ist, zumindest dazu beizutragen, einen Hochbau dabei zu unterstützen, Energie zu dissipieren, die durch ein Naturphänomen oder ein von Menschen verursachtes Ereignis in den Hochbau eingeleitet wurde und mit einer hohen Freisetzung an Gesamtenergie verbunden ist;
- wenigstens einem Gleit- und Dissipationspolster (4), das als Lager an der Ankerplatte (2) und die Anschlagplatte (3) anliegt, zwischen denen es so angeordnet ist, so dass es frei an der Ankerplatte (2) und der Anschlagplatte (3) in mehr als einer zufälligen Seitenrichtung senkrecht zu der linearen Achse (Y) schwingen kann, alternierend zwischen einer ersten Position, die es bei Abwesenheit des Naturphänomens oder des von Menschen verursachten Ereignisses einnimmt und in der das Gleit- und Dissipationspolster (4), die Ankerplatte (2) und die Anschlagplatte (3) im Wesentlichen koaxial zueinander sind, und mehreren zweiten Positionen, die während des Naturphänomens oder des von Menschen verursachten Ereignisses eingenommen werden, in denen das Gleit- und Dissipartionspolster (4), die Ankerplatte (2) und die Anschlagplatte (3) zueinander versetzt sind, um in den Hochbau eingeleitete kinetische Energie des Naturphänomens oder des durch Menschen verursachten Ereignisses zu dissipieren,
wobei die Ankerplatte (2) und die Anschlagplatte (3) wenigstens eine Außenseite (2a, 3a) haben, die in Kontakt mit dem Gleit- und Dissipationspolster (4) ist und vollständig mit einer laminaren Gleitschicht (5) bedeckt ist, die aus:
• trockenem polymeren Schmiermittel hergestellt ist,
• auf die Außenseite (2a, 3a) der Ankerplatte (2) und der Anschlagplatte (3) auftragen ist, so dass sie spontan, stabil und unbeweglich an der Außenseite (2a, 3a) der Ankerplatte (2) und der Anschlagplatte (3) haftet,
wobei das trockene polymere Schmiermittel ein Epoxidharz ist.

2. Isolator (1) nach Anspruch 1, **dadurch gekennzeichnet, dass** die laminare Gleitschicht (5) weich ist und eine Stärke im Bereich von 220 bis 350 µm hat.

3. Isolator (1) nach Anspruch 1 oder 2, **dadurch gekennzeichnet, dass** die laminare Gleitschicht (5) hinsichtlich Dicke und Oberflächenausdehnung gleichmäßig über die gesamte Oberfläche der Außenseite (2a, 3a) der Ankerplatte (2) und/oder der Anschlagplatte (3) verteilt ist.

4. Isolator (1) nach einem der vorstehenden Ansprüche, **dadurch gekennzeichnet, dass** die laminare Gleitschicht (5) auf die gesamte Oberfläche der Außenseite (2a, 3a) der Ankerplatte (2) und/oder der Anschlagplatte (3) durch eines der Verfahren auftragen ist, die aus der Gruppe ausgewählt sind, die aus Bemalen, Lackieren, Graphitieren, und Polymerisieren besteht.

5. Isolator (1) nach einem der vorstehenden Ansprüche, **dadurch gekennzeichnet, dass** der Reibungskoeffizient des Polymers ausgehend von einem zentralen Bereich (5a) der laminaren Gleitschicht (5) zu einem seitlichen Umfangsrand (5b) der laminaren Gleitschicht (5) hin ansteigt.

6. Isolator (1) nach einem der vorstehenden Ansprüche, **dadurch gekennzeichnet, dass** die laminare Gleitschicht (5) in mehrere ringförmigen Sektoren (6, 7, 8) unterteilt ist, die zueinander konzentrisch sind und aus dem trockenen polymeren Schmiermaterial hergestellt ist, wobei dessen Reibungskoeffizient in wenigstens zwei dieser ringförmigen Sektoren (6, 7, 8) unterschiedlich ist.

7. Isolator (1) nach Anspruch 6, **dadurch gekennzeichnet, dass** der Reibungskoeffizient des Polymermaterials von dem innersten (6) der ringförmigen Sektoren (6,7, 8) zu dem äußersten (8) der ringförmigen Sektoren (6, 7, 8) ansteigt.

8. Isolator (1) nach einem der vorstehenden Ansprüche, **dadurch gekennzeichnet, dass** die laminare Gleitschicht (5) vom Typ wässrigen Lösungsmittels ist, sich trocken anfühlt und mit inneren Mikrokapseln oder Mikrosphären versehen ist, die eine aktive flüssigen Zutat enthalten, die dafür geeignet ist, bei Einwirkung von durch das Naturphänomen oder das von Menschen verursachten Ereignis erzeugtem Druck und/oder Schnittkraft auf die Ankerplatte (2) und/oder die Anschlagplatte (3) freigesetzt zu werden, indem die inneren Mikrokapseln oder Mikrosphären aufbrechen, um einen zusätzlichen Mikrogleitfilm zwischen der laminaren Gleitschicht (5) der Ankerplatte (2) und dem Gleit- und Dissipationspolster (4) und/oder zwischen der laminaren Gleitschicht (5) der Anschlagplatte (3) und dem Gleit- und Dispersionspolster (4) zu bilden.

9. Isolator (1) nach Anspruch 8, **dadurch gekennzeichnet, dass** nach Freisetzung der aktive flüssigen Zusatz zwischen der laminaren Gleitschicht (5), die der Ankerplatte (2) zugeordnet ist, und einer ersten Außenseite (4a) des Gleit- und Dissipationspolsters (4), das mit der Ankerplatte (2) zusammenwirkt, und/oder zwischen der laminaren Gleitschicht (5), die der Anschlagplatte (3) zugeordnet ist, und einer zweiten Außenseite (4b) des Gleit- und Dissipationspolsters (4), das mit der Anschlagplatte (3) zusammenwirkt, angeordnet ist.

10. Isolator (1) nach Anspruch 8 oder 9, **dadurch gekennzeichnet, dass** jede der inneren Mikrokapseln oder Mikrosphären eine Außenschale aus Kunststoff und ein in der Außenschale eingeschlossenes Schmieröl enthält, das den aktiven flüssigen Zusatz bildet, der während des Naturphänomens oder des Menschen verursachten Ereignisses freigesetzt wird.

11. Isolator (1) nach Anspruch 10, **dadurch gekennzeichnet, dass** die Außenhülle aus Kunststoff ist.

12. Isolator (1) nach Anspruch 11, **dadurch gekennzeichnet, dass** der Kunststoff ein Harz auf Aminbasis ist.

13. Isolator (1) nach Anspruch 12, **dadurch gekennzeichnet, dass** das Epoxidharz feste Schmierkomponenten enthält, die aus der Gruppe ausgewählt sind, die aus Molybdändisulphid, Graphit, Polytetrafluorethylen (PTFE) oder Kombinationen davon in unterschiedlichen Anteilen besteht.

14. Isolator (1) nach einem der vorstehenden Ansprüche, **dadurch gekennzeichnet, dass** das Gleit- und Dissipartionspolster (4) an wenigstens einer seiner beiden sich axial gegenüber liegenden Außenseiten (4a, 4b), die mit einer Seite der Ankerplatte (2) und auf der axial gegenüberliegenden Seite mit der Anschlagplatte (3) in Kontakt sind, mit einer dissipativen Schicht (9, 10) bedeckt ist, die aus einem wärmehärtenden oder thermoplastischen Material hergestellt ist, das stoffschlüssig stabil und unbeweglich an wenigstens einer der Außenseiten (4a, 4b) haftet.

15. Isolator (1) nach einem der vorstehenden Ansprüche, **dadurch gekennzeichnet, dass** die stabil mit der die laminare Gleitschicht (5) gekoppelte Außenseite (2a, 3a) der Ankerplatte (2) und/oder der Anschlagplatte (3) konkav ist.

## Revendications

1. Isolateur antisismique (1) de type à pendule glissant, comprenant :
- une plaque d'ancrage (2) adaptée pour être agencée à proximité d'une structure de fondation ;
- une plaque de frappe (3) agencée au-dessus de ladite plaque d'ancrage (2) le long d'un axe linéaire (Y) et adaptée pour supporter au moins en partie une structure surélevée afin de dissiper l'énergie cinétique transmise à ladite structure surélevée par un phénomène naturel ou un événement d'origine humaine et pourvu d'une forte libération d'énergie totale ;
- au moins un patin de glissement et de dissipation (4) agencé en appui simple contre ladite plaque d'ancrage (2) et ladite plaque de frappe (3) entre lesquelles il est interposé de manière à osciller librement sur ladite plaque d'ancrage (2) et ladite plaque de frappe (3) selon plus d'une direction latérale aléatoire, orthogonale audit axe linéaire (Y), alternativement entre une première position, prise en l'absence dudit phénomène naturel ou dudit événement d'origine humaine, dans laquelle ledit patin de glissement et de dissipation (4), ladite plaque d'ancrage (2) et ladite plaque de frappe (3) sont sensiblement coaxiaux les uns par rapport aux autres, et une pluralité de secondes positions, prises pendant que ledit phénomène naturel ou ledit événement d'origine humaine est en cours, dans lesquelles ledit patin de glissement et de dissipation (4), ladite plaque d'ancrage (2) et ladite plaque de frappe (3) sont décalés les uns par rapport aux autres, afin de dissiper ladite énergie cinétique dudit phénomène naturel ou dudit événement d'origine humaine, transmise à ladite structure surélevée,
dans lequel au moins ladite plaque d'ancrage (2) et ladite plaque de frappe (3) présentent une face extérieure (2a, 3a), en contact avec ledit patin de glissement et de dissipation (4), entièrement revêtue d'une couche de glissement laminaire (5) qui est :
• réalisée en matériau polymère de lubrification à sec ;
• appliquée sur ladite face extérieure (2a, 3a) de ladite plaque d'ancrage (2) et de ladite plaque de frappe (3) de manière à adhérer spontanément, de manière stable et inamovible à ladite face extérieure (2a, 3a) de ladite plaque d'ancrage (2) et de ladite plaque de frappe (3),
dans lequel ledit matériau polymère de lubrification à sec est une résine époxy.

2. Isolateur (1) selon la revendication 1, **caractérisé en ce que** ladite couche de glissement laminaire (5) est souple et présente une valeur d'épaisseur comprise dans la plage de 220 à 350 µm.

3. Isolateur (1) selon la revendication 1 ou 2, **caractérisé en ce que** la couche de glissement laminaire (5) est uniformément répartie, en épaisseur et en extension surfacique, sur toute la surface de ladite face extérieure (2a, 3a) de ladite plaque d'ancrage (2) et/ou de ladite plaque de frappe (3).

4. Isolateur (1) selon l'une quelconque des revendications précédentes, **caractérisé en ce que** ladite couche de glissement laminaire (5) est appliquée sur toute la surface de ladite face extérieure (2a, 3a) de ladite plaque d'ancrage (2) et/ou de ladite plaque de frappe (3) par l'un quelconque des procédés choisi dans le groupe constitué par la peinture, le laquage, la graphitisation, la polymérisation.

5. Isolateur (1) selon l'une quelconque des revendications précédentes, **caractérisé en ce que** le coefficient de frottement dudit matériau polymère augmente depuis la zone centrale (5a) de ladite couche de glissement laminaire (5) jusqu'au bord latéral périphérique (5b) de ladite couche de glissement laminaire (5).

6. Isolateur (1) selon l'une quelconque des revendications précédentes, **caractérisé en ce que** ladite couche de glissement laminaire (5) est divisée en une pluralité de secteurs annulaires (6, 7, 8) qui sont concentriques les uns par rapport aux autres, réalisés en ledit matériau polymère de lubrification à sec avec un coefficient de frottement différent pour au moins deux desdits secteurs annulaires (6, 7, 8).

7. Isolateur (1) selon la revendication 6, **caractérisé en ce que** ledit coefficient de frottement dudit matériau polymère augmente depuis le plus central (6) des secteurs annulaires (6, 7, 8) jusqu'au plus périphérique (8) des secteurs annulaires (6, 7, 8).

8. Isolateur (1) selon l'une quelconque des revendications précédentes, **caractérisé en ce que** ladite couche de glissement laminaire (5) est de type à solvant aqueux, sèche au toucher et avec l'ajout de microcapsules internes ou de microsphères contenant un ingrédient liquide actif adapté pour être libéré lors de l'application d'une pression et/ou d'une force de cisaillement sur ladite plaque d'ancrage (2) et/ou ladite plaque de frappe (3), générée par ledit phénomène naturel ou par ledit événement d'origine humaine, qui conduit à la rupture desdites microcapsules internes ou microsphères, pour former un microfilm de glissement supplémentaire entre ladite couche de glissement laminaire (5) de ladite plaque d'ancrage (2) et ledit patin de glissement et de dissipation (4) et/ou entre ladite couche de glissement laminaire (5) de ladite plaque de frappe (3) et ledit patin de glissement et de dissipation (4).

9. Isolateur (1) selon la revendication 8, **caractérisé en ce que**, lorsqu'il est libéré, ledit ingrédient liquide actif est interposé entre ladite couche de glissement laminaire (5) associée à ladite plaque d'ancrage (2), et une première face externe (4a) dudit patin de glissement et de dissipation (4) coopérant avec ladite plaque d'ancrage (2), et/ou entre ladite couche de glissement laminaire (5) associée à ladite plaque de frappe (3), et une seconde face externe (4b) dudit patin de glissement et de dissipation (4) coopérant avec ladite plaque de frappe (3).

10. Isolateur (1) selon la revendication 8 ou 9, **caractérisé en ce que** chacune desdites microcapsules internes ou microsphères comprend une enveloppe externe réalisée en matériau plastique, et une huile de lubrification contenue dans ladite enveloppe externe et constituant ledit ingrédient liquide actif libéré lors dudit phénomène naturel ou dudit événement d'origine humaine.

11. Isolateur (1) selon la revendication 10, **caractérisé en ce que** ladite enveloppe externe est réalisée en matériau plastique.

12. Isolateur (1) selon la revendication 11, **caractérisé en ce que** ledit matériau plastique est une résine à base d'amine.

13. Isolateur (1) selon la revendication 12, **caractérisé en ce que** ladite résine époxy contient des composants lubrifiants solides choisis dans le groupe constitué par le disulfure de molybdène, le graphite, le polytétrafluoroéthylène (PTFE) ou des combinaisons de ceux-ci en proportions variables.

14. Isolateur (1) selon l'une quelconque des revendications précédentes, **caractérisé en ce que** ledit patin de glissement et de dissipation (4) présente au moins l'une des deux faces externes (4a, 4b) axialement opposées l'une à l'autre, en contact d'un côté avec ladite plaque d'ancrage (2) et du côté axialement opposé avec ladite plaque de frappe (3), revêtue d'une couche dissipative (9, 10) réalisée en matériau polymère thermodurcissable ou thermoplastique, adhérant de manière intégrale, stable et inamovible à au moins l'une desdites faces externes (4a, 4b).

15. Isolateur (1) selon l'une quelconque des revendications précédentes, **caractérisé en ce que** ladite face extérieure (2a, 3a), à laquelle ladite couche de glissement laminaire (5) est couplée de manière stable, de ladite plaque d'ancrage (2) et/ou de ladite plaque de frappe (3), est concave.
